Europäisches Patentamt

European Patent Office

Office européen des brevets

(11) Veröffentlichungsnummer: **0 342 377**
**A2**

(12) **EUROPÄISCHE PATENTANMELDUNG**

(21) Anmeldenummer: 89107110.2

(51) Int. Cl.⁴: **F16F 6/00**

(22) Anmeldetag: 20.04.89

(30) Priorität: 19.05.88 DE 3817056

(43) Veröffentlichungstag der Anmeldung:
23.11.89 Patentblatt 89/47

(84) Benannte Vertragsstaaten:
DE ES FR GB IT

(71) Anmelder: ROBERT BOSCH GMBH
Postfach 10 60 50
D-7000 Stuttgart 10(DE)

(72) Erfinder: Draxler, Waldemar, Dr. Dipl.-Phys.
Breslauer Strasse 15
D-7015 Münchingen(DE)
Erfinder: Kragl, Willi
Steinbeissstrasse 14
D-7016 Gerlingen(DE)
Erfinder: Scharf, Friedrich, Dr. Dipl.-Phys.
Amundsenstrasse 32
D-7000 Stuttgart 40(DE)
Erfinder: Wolf, Kuno, Dipl.-Phys.
Sonnenhalde 1
D-7455 Jungingen(DE)

(54) **Magnetfeder.**

(57) Es wird eine Magnetfeder (10) vorgeschlagen, die bei minimal möglichem Volumen der Permanent-Magnete (20, 21, 40, 41) einen vorgegebenen Arbeitshub aufweist. Die Reduzierung des Volumens der Permanent-Magnete (20, 20a, 20b, 21, 21a, 21b, 40, 400a, 40b, 41a, 41b) ist möglich durch die Verwendung von zusätzlichen Flußleitstücken (22, 23), die den magnetischen Fluß von den Magneten (20, 20a, 20b, 21, 21a, 21b, 40, 40a, 40b, 41, 41a, 41b) zu ebenen Flußleitstücken (24, 25) weiterleiten, zwischen denen in der labilen Gleichgewichtslage der Magnetfeder (10) jeweils ein Luftspalt (26) entsteht.

FIG. 3

## Magnetfeder

Stand der Technik

Die Erfindung geht aus von einer Magnetfeder nach der Gattung des Hauptanspruchs. Aus der DE-PS 34 10 473 ist eine aus zwei Baugruppen zusammengesetzte Magnetfeder bekannt. Eine Baugruppe ist mit dem gefederten und eine Baugruppe mit dem ungefederten Teil eines Federsystems verbunden. Beide Baugruppen enthalten Permanent-Magnete, die jeweils durch ebene Weicheisenzwischenstücke getrennt sind. Die Kraftwirkung der Magnetfeder entsteht hauptsächlich im Luftspalt zwischen jeweils zwei Weicheisenstücken.

Eine labile Gleichgewichtslage der Magnetfeder liegt vor, wenn sich zwei Weicheisenzwischenstücke gegenüberstehen, an denen gleichnamige Magnetpole anliegen. Die labile Gleichgewichtslage entsteht normalerweise in die Mitte des Magnetfederkennlinienteils mit negativer Federsteifigkeit. Nach einer Verschiebung einer der Baugruppen der Magnetfeder um einen Abstand der Weicheisenzwischenstücke in die eine oder in die andere Richtung wird jeweils die stabile Gleichgewichtslage erreicht, bei der sich ungleichnamige Pole gegenüberstehen. Kurz vor Erreichen der beiden stabilen Gleichgewichtslagen beginnt der Kennlinienteil mit positiver Federsteifigkeit, der im Normalfall nicht ausgenutzt wird. Der maximale Arbeitshub der Magnetfeder beträgt somit in die eine oder in die andere Richtung jeweils etwas weniger als eine Magnetlänge. Bei vorgegebenem Arbeitshub und vorgegebener Kraft, die durch die Anwendung festgelegt sind, werden geringe Abmessungen sowie geringes Gewicht der Magnetfeder gefordert. Diese Forderungen lassen sich am besten mit energiespezifisch starken Magneten, z. B. Kobalt-Samarium-Magneten erfüllen. Nachteilig ist der hohe Preis von qualitativ hochwertigen Magnetwerkstoffen.

Vorteile der Erfindung

Die erfindungsgemäße Magnetfeder weist den Vorteil einer Reduzierung des benötigten Magnetwerkstoffes auf. Magnetfedern, insbesondere solche mit großem Arbeitshub, sind durch folgende Ausführung kostengünstig herstellbar. Erfindungsgemäß ist vorgesehen, daß zwischen den Magneten und den als Flußleitstücken wirkenden ebenen Weicheisenstücken weitere Flußleitstücke angeordnet sind. Die weiteren Flußleitstücke bewirken eine Magnetfluß-Führung in Polarisationsrichtung der Magnete, deren Materialstärke deshalb auf ein erforderliches Mindestmaß zu reduzieren ist. Das Mindestmaß ist materialabhängig und muß derart festgelegt sein, daß eine Entmagnetisierung der Permanent-Magnete ausgeschlossen ist.

Durch die in den Unteransprüchen aufgeführten Maßnahmen sind vorteilhafte Weiterbildungen und Verbesserungen der im Hauptanspruch angegebenen Magnetfeder möglich.

In einem ersten Ausführungsbeispiel der erfindungsgemäßen Magnetfeder sind die ebenen Flußleitstücke sowie die weiteren Flußleitstücke als jeweils ein Stück ausgebildet. Die einstückig ausgeführten Flußleitstücke schließen zwischen zwei Luftspalten jeweils einen scheibenförmig ausgebildeten Magneten ein.

In einem zweiten Ausführungsbeispiel der erfindungsgemäßen Magnetfeder grenzen die Magnetscheiben unmittelbar an die ebenen Flußleitstücke an, so daß zwischen zwei Luftspalten wenigstens zwei Magnetscheiben vorgesehen sind, die durch wenigstens ein weiteres Flußleitstück getrennt sind.

Die hohen Magnetkräfte erfordern eine entsprechende mechanische Festigkeit der Magnetfeder. Erfindungsgemäß ist vorgesehen, die beiden Baugruppen der Magnetfeder mittels Zugschrauben über End-Halteringe aus unmagnetischem Material fest aufeinander zu pressen. Die Festigkeit dieser Verbindung wird weiter erhöht, wenn die Magnetteile derart verzahnt sind, so bei anziehender Magnetpol-Anordnung eine Selbstsperrung in Anziehrichtung der Magnete erfolgt. Weiterhin ist ein Umgießen der erfindungsgemäßen Magnetfeder mit einer Umhüllungsmasse vorgesehen.

Weitere Einzelheiten ergeben sich aus der nachfolgenden Beschreibung.

Zeichnung

Figur 1 zeigt ein Schnittbild einer erfindungsgemäßen Magnetfeder,

Figur 2 zeigt ein Schnittbild entlang der Linie II-II' von Figur 1,

Figur 3 zeigt ein Schittbild entlang der Linie III-III' von Figur 2 und

Figur 4 zeigt ein weiteres Schnittbild durch eine erfindungsgemäße Magnetfeder.

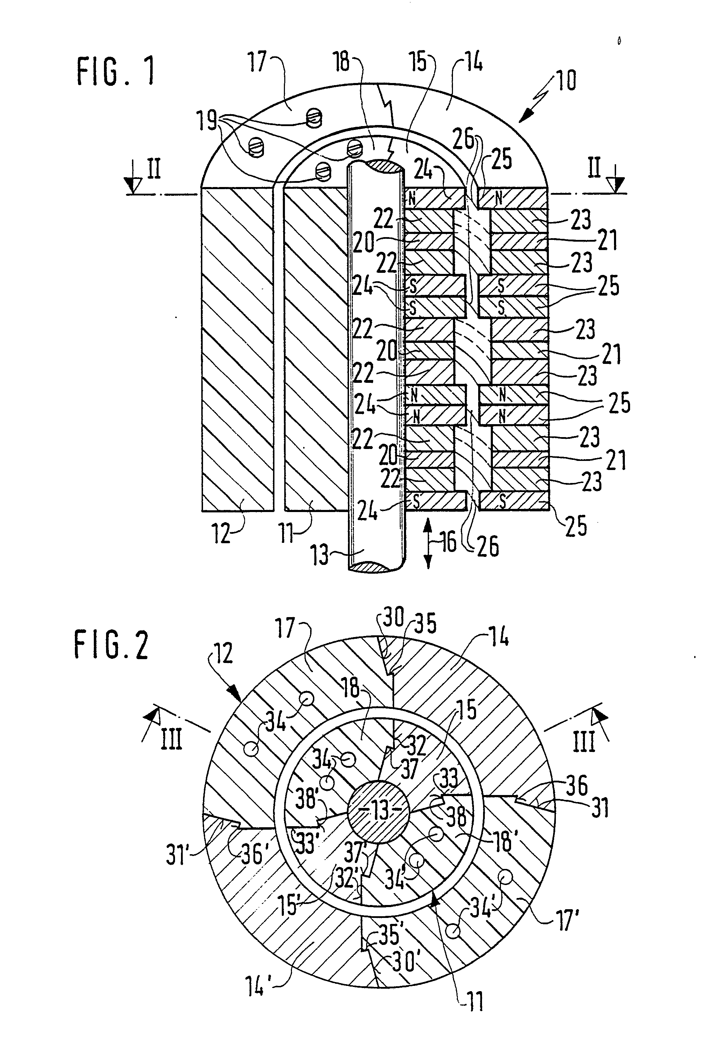

Figur 1 zeigt einen Längsschnitt durch eine Magnetfeder 10, die aus einer ersten und zweiten Baugruppe 11, 12 zusammengesetzt ist. Die erste Baugruppe 11 ist starr mit einer Federachse 13 verbunden. Beide Baugruppen 11, 12 sind abschnittsweise aus unterschiedlichen Materialien zusammengesetzt. Jeweils erste Abschnitte 14, 15 enthalten magnetisches Material. Jeweils zweite Abschnitte 17, 18 enthalten unmagnetisches Material, beispielsweise Kunststoff, Aluminium usw.

In den unmagnetischen Abschnitten 17, 18 sind Schrauben 19 angeordnet.

Die ersten Abschnitte 14, 15 der ersten bzw. zweiten Baugruppe 11, 12 enthalten mehrere in Achsrichtung 16 hintereinander geschaltete Permanent-Magnete 20, 21, die durch magnetisierbares Material 22, 23, 24, 25 voneinander getrennt aber magnetisch miteinander verbunden sind. Das magnetisierbare Material 22 - 25 enthält ebene Stücke 24, 25, wobei die Stücke 24 der ersten Baugruppe 11 und die Stücke 25 der zweiten Baugruppe 12 zueinander jeweils einen Luftspalt 26 bilden.

Aus Übersichtlichkeitsgründen sind in der Figur 1 nicht alle ebenen Stücke mit den Bezugszahlen 24 und 25 versehen.

Weiterhin umfaßt das magnetisierbare Material 22 - 25 weitere Stücke 22, 23, die jeweils den magnetischen Fluß zwischen den Permanent-Magneten 20, 21 und den ebenen Stücken 24, 25 führen.

Die Arbeitsweise der erfindungsgemäßen Magnetfeder 10 wird anhand der Figur 1 näher erläutert:

Die erste und zweite Baugruppe 11, 12 sind in Figur 1 beispielsweise kreisförmig ausgebildet. Anstelle der gezeigten kreisförmigen Ausbildung ist auch eine lineare Ausbildung möglich, bei der die beiden Abschnitte 14, 17 der zweiten Baugruppe 12 und die beiden Abschnitte 15, 18 der ersten Baugruppe 11 eben sind. Beispielsweise ist die erste Baugruppe 11 mit einer abzufedernden und die zweite Baugruppe 12 mit einem feststehenden Teil eines Federsystems verbunden. In Figur 1 ist die labile Gleichgewichtslage der Magnetfeder 10 eingetragen, bei der sich gleichnamige Pole der Permanent-Magnete 20, 21 in den Luftspalten 26 gegenüberstehen. Eine Verschiebung der ersten Baugruppe 11 in Achsrichtung 16 gegenüber der zweiten Baugruppe 12 um etwas weniger als einen Abstand von Magnetdicke 20, 21 und zwei mal Flußleitstücke 22, 23 zwischen den Luftspalten 26 in die eine oder in die andere Richtung entspricht dem Gesamtarbeitshub der Magnetfeder 10, bei dem eine negative Federsteifigkeit vorliegt. Bei einem weiteren Auslenken in Achsrichtung 16 in die eine oder in die andere Richtung wird der Kennlinienteil mit positiver Federsteifigkeit erreicht, der jeweils in einer stabilen Gleichgewichtslage mündet, wobei sich ungleichnamige Pole in den Luftspalten 26 genau gegenüberstehen.

Die Kosten der Magnetfeder 10 werden hauptsächlich durch die Materialkosten für die Permanent-Magnete 20, 21 bestimmt. Das Permanent-Magnetvolumen muß deshalb auf ein Mindestmaß reduziert werden, bei dem eine irreversible Entmagnetisierung noch ausgeschlossen wird. Die Permanent-Magnete 20, 21 sind beispielsweise als dünne Scheiben ausgebildet, deren Dicke bei der Verwendung des Materials Kobalt-Samarium etwa 5 mm beträgt.

Derartige dünne Magnetscheiben würden den Arbeitshub in Achsrichtung 16 der Magnetfeder 10 einschränken, wenn die ebenen Stücke 24, 25 unmittelbar an die Permanent-Magnete 20, 21 angrenzen. Zwischen den ebenen Stücken 24, 25, die als Flußleitstücke zu den Luftspalten 26 hinwirken, sind deshalb weitere Stücke 22, 23 vorgesehen, die als Flußleitstücke zwischen den Permanent-Magneten 20, 21 und den ebenen Flußleitstücken 24, 25 wirken. Die ebenen Flußleitstücke 24, 25 sowie die weiteren Flußleitstücke 22, 23 werden vorteilhaft als ein Stück ausgebildet. Mit den weiteren Flußleitstücken 22, 23 wird der Arbeitshub der Magnetfeder 10 bei begrenzter Dicke der Permanent-Magnete 20, 21 auf die geforderten Hubwerte erweiterbar. Im Bereich des Luftspaltes 26, der zwischen den Flußleitstücken 22, 23 und den Permanent-Magneten 20, 21 entsteht, wird zur Vermeidung von Streuverlusten ein größerer Abstand zwischen der ersten und zweiten Baugruppe 10, 11 der Magnetfeder 10 vorgesehen.

Die Flußleitstücke 22 - 25 sind aus magnetisierbarem Material, beispielsweise Weicheisen, hergestellt. Es eignet sich jedes Material mit einer möglichst schmalen Hysteresekurve und mit möglichst hoher Sättigungsinduktion.

Eine Möglichkeit zur Verstellung der Federsteifigkeit ist gegeben durch Verdrehen des ersten Abschnitts 15 der ersten Baugruppe 11 gegenüber dem ersten Abschnitt 14 der zweiten Baugruppe 12. Das Verdrehen des Abschnitts 15 gegenüber dem Abschnitt 14 hat eine Abnahme der zwischen den Baugruppen 11, 12 auftretenden Magnetkräfte zur Folge.

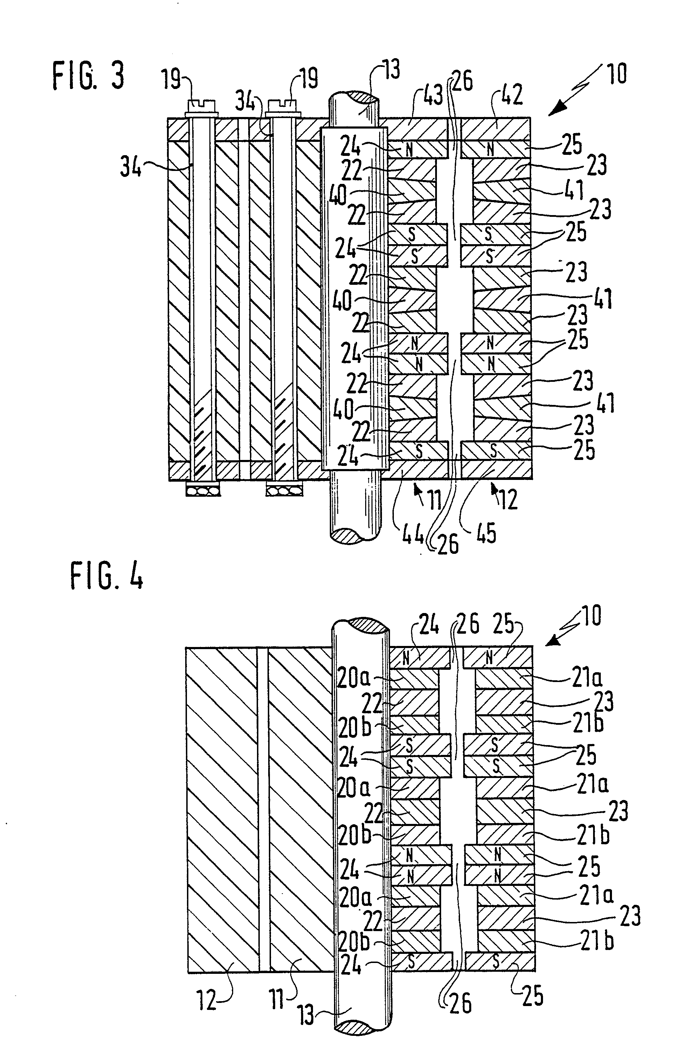

Der weitere Aufbau der Magnetfeder 10 wird anhand der Figuren 2 und 3 beschrieben.

Figur 2 zeigt einen Querschnitt durch die Magnetfeder 10 entlang der in Figur 1 eingetragenen Linie II-II' mit einer kreisförmigen Ausgestaltung der ersten und zweiten Baugruppen 11, 12. Die beiden ersten Abschnitte 14, 15 der beiden Baugruppen 11, 12 sind doppelt 14, 14'; 15, 15' vorhanden. Ebenso sind die zweiten Abschnitte 17, 18 der beiden Baugruppen 11, 12 doppelt vorhanden 17, 17'; 18, 18'. Die Grenzlinien 30, 31, 30', 31' zwischen den ersten Abschnitten 14, 14' und den zweiten Abschnitten 17, 17' der zweiten Baugruppe 12 und die Grenzlinien 32, 33, 32', 33' zwischen den ersten Abschnitten 15, 15' und den zweiten Abschnitten 18, 18' der ersten Baugruppe 11 verlaufen so, daß eine Selbstsperrung in Anziehrichtung der Magnete eintritt, wenn sich ungleichnamige Pole in den Luftspalten 26 gegenüberstehen.

Dies wird beispielsweise durch eine Verdrehung der Grenzlinien gegenüber dem Radius erreicht. Eine Erhöhung der Sperrwirkung ergibt sich, wenn in den Grenzlinien 30, 30', 31, 31', 32, 32', 33, 33' wenigstens eine Stufe vorgesehen ist, die die ersten Abschnitte 14, 14', 15, 15' mit den zweiten Abschnitten 17, 17', 18, 18' verzahnt. In den beiden zweiten Abschnitten 17, 17' der zweiten Baugruppe 12 und in den beiden zweiten Abschnitten 18, 18' der ersten Baugruppe 11 befinden sich Löcher 34, 34', durch die die Schrauben 19 geführt sind.

Figur 3 zeigt einen Längsschnitt durch die Magnetfeder 10 entlang der in Figur 2 gezeigten Schnittlinie III-III'. Diejenigen Teile in Figur 3, die mit denen in den Figuren 1 und 2 gezeigten Teilen übereinstimmen, tragen dieselben Bezugszahlen wie in den Figuren 1 und 2. Die Permanent-Magnete 40, 41 stimmen, bis auf die Keilform, mit den in Figur 1 gezeigten Permanent-Magneten 20, 21 überein. Die Keilform, die bedarfsweise vorgesehen sein kann, ist in der Weise ausgebildet, daß eine Selbstsperrung in Anziehrichtung der Permanent-Magnete 40, 41 eintritt, wenn sich ungleichnamige Pole in den Luftspalten 26 gegenüberstehen. Die beiden Baugruppen 11, 12 der Magnetfeder 10 werden von Schrauben 19 zusammengehalten, die als Zugschrauben ausgebildet sind. Die Schrauben 19 verlaufen in beiden Baugruppen 11, 12 ausschließlich in den zweiten Abschnitten 17, 17', 18, 18', um magnetische Kurzschlüsse zu verhindern. Die Schrauben 19 greifen an der Magnetfeder 10 über Halteringe 42 - 45 an, die aus unmagnetischem Material hergestellt sind. Eine weitere Erhöhung der mechanischen Festigkeit wird durch ein Umgießen wenigstens einer Baugruppe 11, 12 der Magnetfeder 10 mit einer in den Figuren nicht gezeigten Umhüllungsmasse erreicht.

Figur 4 zeigt ein weiteres Schnittbild durch eine erfindungsgemäße Magnetfeder. Diejenigen Teile, die mit den in Figur 1 gezeigten Teilen übereinstimmen, tragen die selben Bezugszahlen wie in Figur 1. Die Magnetfeder 10 ist gemäß dem zweiten Ausführungsbeispiel ausgestaltet, bei dem die Magnete 20a, 20b der inneren Baugruppe 11 und die Magnete 21a, 21b der äußeren Baugruppe 12 unmittelbar an die ebenen Flußleitstücke 24 bzw. 25 grenzen. Aus Übersichtlichkeitsgründen sind nicht alle ebenen Flußleitstücke mit den Bezugszahlen 24 bzw. mit den Bezugszahlen 25 versehen. Der wesentliche Unter schied zu der in der Figur 1 gezeigten Ausführung liegt darin, daß die dort gezeigten Magnete 20, 21 in jeweils zwei Magnetscheiben 20a, 20b und 21a, 21b aufgeteilt sind. Die Magnete 20a und 20b sind von den weiteren Flußleitstücken 22 und die Magnete 21a sind von den Magneten 21b durch die weiteren Flußleitstücke 23 getrennt. Der Vorteil dieser Anordnung gegenüber der in Figur 1 gezeigten Ausführung ist der geringere Streufluß, der eine größere Federkraft bei gleicher eingesetzter Magnetmasse erbringt.

In einer weiteren Ausgestaltung der in Figur 4 angegebenen erfindungsgemäßen Magnetfeder 10 ist eine weitere Aufteilung der Magnete 20a, 20b und der Magnete 21a, 21b in Teilmagnete vorgesehen, die ihrerseits wieder durch zusätzliche weitere Flußleitstücke 22 und 23 getrennt sind.

Die in den Figuren 2 und 3 gezeigten Ausgestaltungen der Magnetfeder 10 sind ohne Einschränkungen auch auf die in Figur 4 gezeigte Anordnung übertragbar. Insbesondere werden die in Figur 3 angegebenen, keilförmig ausgebildeten Magnete 40, 41 in Teilmagnete 40a, 40b bzw. 41a, 41b aufgeteilt.

Die erfindungsgemäße Magnetfeder 10 ist nicht auf die in den Figuren 1 bis 4 gezeigten Ausführungsformen eingeschränkt. Neben der Ausgestaltung als ebene Feder, auf die bereits hingewiesen wurde, ist auch eine Ausgestaltung als Drehfeder möglich. Bei einer Drehfeder erstreckt sich der Arbeitshub nicht in Achsrichtung 16, sondern in Drehrichtung um die Federachse 13. In dieser Ausgestaltung der Magnetfeder 10 ist der in den Figuren 1 und 3 gezeigte Schichtaufbau kreisförmig um die Federachse 13 angeordnet. Eine Verstellung der Federsteifigkeit wird dann erzielt durch ein Verschieben der einen Baugruppe 11 gegenüber der anderen Baugruppe 12 in Achsrichtung der Drehfeder.

## Ansprüche

1. Magnetfeder mit zwei Baugruppen, von denen eine erste Baugruppe mit einem zu federnden und eine zweite Baugruppe mit einem ungefederten Teil eines Federsystems verbunden ist, mit zwischen Permanent-Magneten in beiden Baugruppen angeordneten ebenen Flußleitstücken, dadurch gekennzeichnet, daß zwischen den Permanent-Magneten (20, 21, 40, 41) und den ebenen Flußleitstücken (24, 25) weitere Flußleitstücke (22, 23) angeordnet sind.

2. Magnetfeder nach Anspruch 1, dadurch gekennzeichnet, daß die ebenen Flußleitstücke (24, 25) und die weiteren Flußleitstücke (22, 23) einstückig ausgebildet sind.

3. Magnetfeder nach Anspruch 1, dadurch gekennzeichnet, daß die Permanent-Magnete (20, 21, 40, 41) in Teilmagnete (20a, 20b, 21a, 21b, 40a, 40b, 41a, 41b) aufgeteilt sind, die jeweils an die ebenen Flußleitstücke (24 bzw. 25) grenzen und daß die Teilmagnete (20a, 20b, 21a, 21b, 40a, 40b, 41a, 41b) von den weiteren Flußleitstücken (22, 23) getrennt sind.

4. Magnetfeder nach Anspruch 1 oder 3, dadurch gekennzeichnet, daß die Permanent-Magnete (40, 41) keilförmig ausgebildet sind auf die Weise, daß eine Selbstsperrung in Anziehrichtung der Permanent-Magnete (40, 41) eintritt, wenn sich ungleichnamige Pole in den Luftspalten (26) zwischen den ebenen Flußleitstücken (24, 25) gegenüberstehen.

5. Magnetfeder nach Anspruch 1 oder 3, dadurch gekennzeichnet, daß Grenzlinien (30, 31, 30', 31') zwischen ersten Abschnitten (14, 14') und zweiten Abschnitten (17, 17') der zweiten Baugruppe (12) und Grenzlinien (32, 33, 32', 33') zwischen ersten Abschnitten (15, 15') und zweiten Abschnitten (18, 18') der ersten Baugruppe (11) jeweils auf die Weise verlaufen, daß eine Selbstsperrung in Anziehrichtung der Permanent-Magnete (20, 21, 40, 41) eintritt, wenn sich ungleichnamige Pole in den Luftspalten (26) zwischen den ebenen Flußleitstükken (24, 25) gegenüberstehen.

6. Magnetfeder nach Anspruch 1 oder 3, dadurch gekennzeichnet, daß in Grenzlinien (30, 31, 30', 31') zwischen ersten Abschnitten (14, 14') und zweiten Abschnitten (17, 17') der zweiten Baugruppe (12) und die Grenzlinien (32, 33, 32', 33') zwischen ersten Abschnitten (15, 15') und zweiten Abschnitten (18, 18') der ersten Baugruppe (11) jeweils wenigstens eine Stufe zum Verzahnen der ersten und zweiten Abschnitte (14, 14', 17, 17'; 15, 15', 18, 18') vorgesehen ist, derart, daß eine Selbstsperrung in Anziehrichtung der Permanent-Magnete (20, 21, 40, 41) eintritt, wenn sich ungleichnamige Pole in den Luftspalten (26) zwischen den ebenen Flußleitstücken (24, 25) gegenüberstehen.

7. Magnetfeder nach Anspruch 1 oder 3, dadurch gekennzeichnet, daß Halteringe (42, 43, 44, 45) aus unmagnetischem Material zum Zusammenpressen der ersten und zweiten Baugruppe (10, 12) der Magnetfeder (10) mittels Zugschrauben (19) vorgesehen sind, die in den zweiten Abschnitten (17, 17', 18, 18') der beiden Baugruppen (11, 12') verlaufen.

FIG. 1

FIG.2

FIG. 3

FIG. 4